(19) Europäisches Patentamt / European Patent Office / Office européen des brevets

(11) EP 4 685 193 A1

(12) EUROPEAN PATENT APPLICATION
published in accordance with Art. 153(4) EPC

(43) Date of publication:
**28.01.2026 Bulletin 2026/05**

(21) Application number: **24774746.2**

(22) Date of filing: **11.03.2024**

(51) International Patent Classification (IPC):
***C08L 83/04*** *(2006.01)* ***C08K 3/11*** *(2018.01)*
***C08K 5/01*** *(2006.01)* ***C09D 7/63*** *(2018.01)*
***C09D 201/00*** *(2006.01)*

(52) Cooperative Patent Classification (CPC):
**C08K 3/11; C08K 5/01; C08L 83/04; C09D 7/63; C09D 201/00**

(86) International application number:
**PCT/JP2024/009335**

(87) International publication number:
**WO 2024/195607 (26.09.2024 Gazette 2024/39)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **23.03.2023 JP 2023046586**

(71) Applicant: **SHIN-ETSU CHEMICAL CO., LTD.**
**Tokyo 1000005 (JP)**

(72) Inventors:
- **HAMAJIMA Yuta**
  **Annaka-shi, Gunma 379-0224 (JP)**
- **UBUKATA Saori**
  **Annaka-shi, Gunma 379-0224 (JP)**

(74) Representative: **Schicker, Silvia**
**Wuesthoff & Wuesthoff**
**Patentanwälte und Rechtsanwalt PartG mbB**
**Schweigerstraße 2**
**81541 München (DE)**

# (54) INORGANIC-TIN EMULSION COMPOSITION AND METHOD FOR PRODUCING SAME

(57) The present invention is an inorganic tin emulsion composition comprising: (A) an inorganic tin compound: 100 parts by mass; (B) a hydrocarbon oil: 5 to 100 parts by mass; (C) a surfactant: 5 to 50 parts by mass; and (D) water: 50 to 2,000 parts by mass. Thus, the present invention provides an inorganic tin emulsion having good storage stability and a manufacturing method of the same.

EP 4 685 193 A1

## Description

TECHNICAL FIELD

The present invention relates to an inorganic tin emulsion composition and a manufacturing method of the same.

BACKGROUND ART

Silicone emulsions that form a rubber film when dried have traditionally been available in a variety of compositions and are used as textile treatment agents, rubber coating agents, building material coating agents, paper and plastic film coating agents, etc., or as additives to these, for the purpose of imparting slipperiness, water repellency, and release properties.

A method for forming a rubber film is to form a silicone elastomer film by an addition reaction between alkenylsilyl groups and hydrosilyl groups at the same time as drying. Examples of the proposed compositions thereof include an emulsion composition including a diorganopolysiloxane whose molecular chain terminals are chapped with a vinyl group, an organohydrogenpolysiloxane, and a platinum catalyst; and an emulsion composition including a diorganopolysiloxane having a vinyl group on a molecular chain terminal or a side chain, a polysiloxane having a hydrogen atom bonded to a silicon atom, a colloidal silica, and a platinum catalyst. However, in these compositions, if the siloxane containing hydrosilyl groups and the platinum catalyst are allowed to coexist, the reaction progresses over time and hydrogen gas is generated, so the silicone emulsion and platinum catalyst have to be mixed before use, which is inconvenient. In addition, there is a drawback that the coating does not cure sufficiently if the substrate to be coated contains compounds that inhibit the addition reaction, such as compounds containing amines, tin, phosphorus, or sulfur.

As a method for forming a silicone rubber film other than the addition reaction, there is a method in which a condensation reaction of silicone is caused to proceed during drying. A silicone emulsion composition is known that consists of an anionically stabilized hydroxylated diorganopolysiloxane, colloidal silica, and an organic tin compound or an organic amine compound, and has a pH of 9 to 11.5 (Patent Document 1).

In compositions that cure through a condensation reaction, an organic tin compound with high catalytic activity needs to be used to obtain a sufficiently cured rubber film in a short period of time. However, in recent years, using organic tin compounds has begun to be avoided due to their toxicity.

As a method for forming a silicone rubber film without using an organic tin compound, Patent Document 2 proposes a composition in which a mixture of a hydroxy-containing organopolysiloxane and an aminoxy-containing siloxane and/or silane is emulsified. Although this composition does not require a condensation catalyst to form a cured film, there is a problem that amino compounds are formed as by-products during the condensation reaction.

Patent Document 3 proposes a silicone emulsion composition including an organopolysiloxane having: a hydroxyl group and/or an alkoxy group bonded to a silicon atom at a molecular chain terminal; and an alkyl group containing an amino group, a trialkoxysilane or tetraalkoxysilane, and a metal compound. This composition can produce a sufficiently cured rubber film in a short time by a condensation reaction without using a tin compound, but the organopolysiloxane, which is the raw material of this composition, gradually polymerizes over time and increases in molecular weight, making it impossible to store for long periods of time. In addition, there is a problem that the emulsion of organopolysiloxane in this composition cannot be produced by emulsion polymerization, so it is not possible to manufacture an emulsion of organopolysiloxane with a high degree of polymerization.

Also proposed is a silicone emulsion composition consisting of a hydroxyl group-containing organopolysiloxane, colloidal silica, an amide group- and carboxyl group-containing silane, and an epoxy group-containing silane (Patent Document 4). Patent Document 5 proposes the use of a bismuth compound.

If an organic tin compound is not used, there is a problem that curing is poor and the strength of the rubber film is reduced. As a method that does not use an organic tin compound, the use of an inorganic tin compound can be considered.

Inorganic tin compounds can be an effective alternative to organic tin curing catalysts in solvent-based systems, but their use in aqueous systems is difficult due to the tendency of inorganic tin to be hydrolyzed and deactivated.

The prior art does not describe the use of inorganic tin compounds in an aqueous system. In order to use inorganic tin compounds as a curing catalyst in aqueous compositions, it is important to obtain an emulsion composition including an inorganic tin compound as the main component and having excellent stability.

CITATION LIST

PATENT LITERATURE

Patent Document 1: JPS56-16553A
Patent Document 2: JPH06-73291A
Patent Document 3: JP2005-306994A
Patent Document 4: JP2008-231276A
Patent Document 5: JP2014-224164A

## SUMMARY OF INVENTION

### TECHNICAL PROBLEM

The present invention has been made in consideration of the above circumstances, and an object of the present invention is to provide an inorganic tin emulsion with good storage stability and a manufacturing method of the same.

### SOLUTION TO PROBLEM

The present invention has been made to achieve the above object, providing an inorganic tin emulsion composition comprising:

(A) an inorganic tin compound: 100 parts by mass;
(B) a hydrocarbon oil: 5 to 100 parts by mass;
(C) a surfactant: 5 to 50 parts by mass; and
(D) water: 50 to 2,000 parts by mass.

This configuration makes it possible to obtain an inorganic tin emulsion composition that has excellent storage stability and can be used as a water-based curing catalyst.
In this case, the component (B) may be an aliphatic hydrocarbon oil having 10 to 50 carbon atoms.
This makes it possible to obtain an inorganic tin emulsion composition with better storage stability.
In addition, the component (A) may be at least one of tin bis(2-ethylhexanoate) and tin bisneodecanoate.
These materials are easy to obtain and handle, and are therefore suitable for use in the present invention.
The inorganic tin emulsion composition may have emulsified particles having an average particle size of 500 nm or less.
This results in a more stable and preferable emulsion composition.
The emulsion composition may contain no organic tin compound.
This will help reduce the environmental and toxic impacts.
It is possible to provide a film-forming silicone emulsion composition including the emulsion composition as described above.
This makes it possible to obtain a film with improved film properties such as hardness and tensile strength.
It is possible to provide a coating agent including the emulsion composition as described above.
This makes it possible to obtain an excellent coating agent.
The present invention provides:
a manufacturing method of an inorganic tin emulsion composition, comprising a step of forming emulsion particles by using an emulsifying apparatus to emulsify a mixture containing:

(A) an inorganic tin compound: 100 parts by mass;
(B) a hydrocarbon oil: 5 to 100 parts by mass;
(C) a surfactant: 5 to 50 parts by mass; and
(D) water: 50 to 2,000 parts by mass.

This manufacturing method makes it possible to manufacture an inorganic tin emulsion composition with excellent storage stability.
The manufacturing method of the present invention may further include a step of reducing the particle size using an emulsifying apparatus that reduces the size of emulsion particles using high pressure.
By reducing the particle size of the emulsion particles, it is possible to manufacture an inorganic tin emulsion composition with better storage stability.
In the manufacturing method, in the step of reducing the particle size using an emulsifying apparatus that reduces the particle size of emulsion particles using high pressure, the average particle size of the emulsion particles may be reduced to 500 nm or less.
This makes it possible to manufacture an inorganic tin emulsion composition with even better storage stability.

## ADVANTAGEOUS EFFECTS OF INVENTION

As described above, the inorganic tin emulsion composition of the present invention has high storage stability and is therefore useful as a curing catalyst for aqueous systems. In addition, since it contains no organic tin compound, it has low toxicity and environmental impact.

## DESCRIPTION OF EMBODIMENTS

As mentioned above, there was a need to develop an inorganic tin emulsion composition with excellent storage stability.

As a result of extensive research into the above-mentioned problems, the inventors discovered that an inorganic tin emulsion composition containing the following components (A) to (D) has excellent storage stability and can be used as an aqueous curing catalyst, and thus completed the present invention.

That is, the present invention is an inorganic tin emulsion composition comprising:

(A) an inorganic tin compound: 100 parts by mass;
(B) a hydrocarbon oil: 5 to 100 parts by mass;
(C) a surfactant: 5 to 50 parts by mass; and
(D) water: 50 to 2,000 parts by mass.

The manufacturing method of the present invention is manufacturing method of an inorganic tin emulsion composition comprising a step of forming emulsion particles by using an emulsifying apparatus to emulsify a mixture containing:

(A) an inorganic tin compound: 100 parts by mass;
(B) a hydrocarbon oil: 5 to 100 parts by mass;
(C) a surfactant: 5 to 50 parts by mass; and
(D) water: 50 to 2,000 parts by mass.

Hereinafter, the present invention will be described in detail. However, the present invention is not limited thereto.

### Component (A)

The component (A) of the present invention is an inorganic tin compound. Note that "inorganic tin compound" in the present invention refers to a tin compound having no tin-carbon bond.

There are no particular limitations on the component (A) as long as it is an inorganic tin compound, but tin carboxylates are preferable. Among these, tin bis(2-ethylhexanoate) and tin bisneodecanoate are particularly preferable from the viewpoint of availability and handling. The component (A) may be used alone or in an appropriate combination of two or more types.

### Component (B)

The component (B) of the present invention is a hydrocarbon oil. In the present invention, by blending an appropriate amount of the component (B), an inorganic tin compound that is inherently low in stability in an aqueous system can be made into an emulsion with good storage stability.

There is no restriction on whether the hydrocarbon oil is linear or branched, and examples thereof include an $\alpha$-olefin oligomer, an isoparaffin, an isododecane, an isohexadecane, a squalane, a synthetic squalane, a vegetable squalane, a ceresin, a paraffin, a paraffin wax, a polyethylene wax, a polyethylene-polypropylene wax, an (ethylene/-propylene/styrene) copolymer, a (butylene/propylene/styrene) copolymer, a liquid paraffin, a pristane, a polyisobutylene, a hydrogenated polyisobutene, a microcrystalline wax, and a petrolatum.

The component (B) is preferably an aliphatic hydrocarbon oil having 10 to 50 carbon atoms, and more preferably an aliphatic hydrocarbon oil having 10 to 40 carbon atoms. Examples of aliphatic hydrocarbon oils having 10 to 50 carbon atoms include an isoparaffin, an isododecane, an isohexadecane, and a liquid paraffin. A liquid paraffin is particularly preferable. The component (B) may be used alone or in a combination of two or more types.

The blend amount of the component (B) is 5 to 100 parts by mass, preferably 8 to 70 parts by mass, more preferably 10 to 50 parts by mass, and particularly preferably 20 to 40 parts by mass, per 100 parts by mass of the component (A).

If the amount of the component (B) is less than the lower limit, the storage stability of the emulsion will deteriorate,

whereas if it exceeds the upper limit, the amount of hydrocarbon oil in the composition will be too high, decreasing its catalytic activity.

Component (C)

The component (C) of the present invention is a surfactant, and is an emulsifier for emulsifying and dispersing the component (A) and the component (B) in water to form an emulsion composition. The surfactant for the component (C) is not particularly limited, and may be a nonionic surfactant, an anionic surfactant, a cationic surfactant, or an amphoteric surfactant. These may be used alone or in combination of two or more types.
Examples of the nonionic surfactants used here include polyoxyethylene alkyl ethers, polyoxyethylene polyoxypropylene alkyl ethers, polyoxyethylene alkylphenyl ethers, polyethylene glycol fatty acid esters, sorbitan fatty acid esters, polyoxyethylene sorbitan fatty acid esters, polyoxyethylene sorbit fatty acid esters, glycerin fatty acid esters, polyoxyethylene glycerin fatty acid esters, polyglycerin fatty acid esters, propylene glycol fatty acid esters, polyoxyethylene castor oil, polyoxyethylene hydrogenated castor oil, polyoxyethylene hydrogenated castor oil fatty acid esters, polyoxyethylene alkylamines, polyoxyethylene fatty acid amides, polyoxyethylene modified organopolysiloxanes, polyoxyethylene polyoxypropylene modified organopolysiloxanes, etc.
Examples of the anionic surfactants include alkyl sulfate ester salts such as sodium lauryl sulfate, polyoxyethylene alkyl ether sulfate ester salts, polyoxyethylene alkyl phenyl ether sulfate ester salts, alkyl benzene sulfonate salts, polyoxyethylene alkyl phenyl ether sulfonate salts, alkyl diphenyl ether disulfonate salts, alkanesulfonate salts, N-acyltaurate salts, dialkyl sulfosuccinate salts, monoalkyl sulfosuccinate salts, polyoxyethylene alkyl ether sulfosuccinate salts, fatty acid salts, polyoxyethylene alkyl ether carboxylate salts, N-acyl amino acid salts, monoalkyl phosphate ester salts, dialkyl phosphate ester salts, polyoxyethylene alkyl ether phosphate ester salts, etc.
Examples of the cationic surfactants include alkyl trimethyl ammonium salts, dialkyl dimethyl ammonium salts, polyoxyethylene alkyl dimethyl ammonium salts, dipolyoxyethylene alkyl methyl ammonium salts, tripolyoxyethylene alkyl ammonium salts, alkyl benzyl dimethyl ammonium salts, alkyl pyridinium salts, monoalkyl amine salts, monoalkyl amido amine salts, etc.
Examples of the amphoteric surfactants include alkyl dimethylamine oxide, alkyl dimethyl carboxybetaine, alkyl amidopropyl dimethyl carboxybetaine, alkyl hydroxysulfobetaine, alkyl carboxymethyl hydroxyethyl imidazolinium betaine, etc.
As the surfactant, a nonionic surfactant is preferable, because a small amount thereof can emulsify the oil phase components and form fine particles.
From the viewpoint of emulsion stability, the nonionic surfactant preferably has an HLB value (when a plurality of surfactants is used, the HLB value of the entire mixture) in the range of 9.0 to 18.0, more preferably 10.0 to 17.0, and further preferably 11.0 to 16.0. Note that the HLB value is a value calculated by the Griffin method. The HLB value is calculated by the following formula:

$$N = N1 \times W1 + N2 \times W2$$

N: HLB value when two types of surfactants with different HLB values are used
N1, N2: HLB of each surfactant
W1, W2: Weight fraction of each surfactant (W1+W2=1)

The amount of the component (C) used is 5 to 50 parts by mass, preferably 7 to 30 parts by mass, and particularly preferably 10 to 25 parts by mass, per 100 parts by mass of the component (A). If the amount of the component (C) used is less than 5 parts by mass per 100 parts by mass of the component (A), the stability of the emulsion decreases, and if it exceeds 50 parts by mass, the catalytic activity decreases.

Component (D)

The emulsion composition of the present invention contains water as the component (D). As the component (D), any water may be used, such as ion-exchanged water or purified water. The amount of water is 50 to 2,000 parts by mass, and more preferably 100 to 1,000 parts by mass, per 100 parts by mass of the component (A). If the amount of water is less than 50 parts by mass per 100 parts by mass of the component (A), emulsification will be difficult, and if the amount of water exceeds 2,000 parts by mass, the concentration of inorganic tin in the component (A) will be low, and a large amount of the emulsion composition will need to be added to use it as a catalyst, making it difficult to use it as a catalyst.
The manufacturing method of the present invention will be described below.
The mixture containing the components (A), (B), (C), and (D) is emulsified using an emulsifying apparatus to

prepare an inorganic tin emulsion composition. The emulsification here may be performed using an emulsifying apparatus such as a homodisper, a homomixer, a colloid mill, a line mixer, a universal mixer, an ultramixer, a planetary mixer, a combimix, or a high-pressure homogenizer. In addition, after the mixture containing the components (A), (B), (C), and (D) is emulsified using a homodisper, a homomixer, etc. to prepare an emulsion composition, the emulsion particles may be further reduced in size using an emulsifying apparatus that reduces the size of emulsion particles using high pressure, such as a high-pressure homogenizer. The emulsifying apparatus used may be one type, or two or more types may be used in combination. More preferably, the manufacturing method uses an emulsifying apparatus that reduces the size of emulsion particles, such as a high-pressure homogenizer.

In the manufacturing method, it is particularly preferable to make the average particle size 500 nm or less using an emulsifying apparatus that reduces the size of emulsion particles using high pressure, such as a high-pressure homogenizer.

The average particle size of the emulsion particles in the emulsion composition of the present invention is preferably 800 nm or less. It is more preferably 500 nm or less, and particularly preferably 400 nm or less. There is no lower limit in particular, but it is about 50 nm or more. If the average particle size exceeds 800 nm, the stability of the emulsion decreases, so this is not preferable. Note that the average particle size of the emulsion particles is the particle size at a volume integrated value of 50% measured using a laser diffraction/scattering method.

From the viewpoints of the environment and toxicity, the emulsion composition of the present invention preferably contains no organic tin compounds.

The emulsion composition of the present invention may contain inorganic powders, pigments, dyes, thickeners, preservatives, antibacterial agents, deodorants, rust inhibitors, antioxidants, antifoaming agents, antistatic agents, UV absorbers, antifreeze agents, water-soluble resins, organic resin emulsions, etc.

The emulsion composition of the present invention can be used as an alternative catalyst to the organic tin compounds that are conventionally used. For example, it can be used as a catalyst for urethane reactions, esterification reactions, transesterification reactions, silicone condensation reactions, etc. The emulsion composition of the present invention has good storage stability, and is therefore particularly suitable as a catalyst for aqueous compositions, and can be used, for example, as a curing catalyst for silicone emulsions.

The emulsion composition of the present invention is useful as a curing catalyst for silicone emulsions. By using the emulsion composition of the present invention as a curing catalyst for film-forming silicone emulsions, it is possible to improve film properties such as film hardness and tensile strength.

"Film-forming silicone emulsion" in the present invention means a silicone emulsion that can form a film after drying. For example, an emulsion that contains an organopolysiloxane with a crosslinked structure can form a film after drying, and is a film-forming silicone emulsion. The presence or absence of film-forming properties may be assessed by, for example, weighing each silicone emulsion composition on a 15 cm x 10 cm PP (polypropylene) tray so that the non-volatile content is 8.0 g, drying it at 25°C for 48 hours, and then drying it at 105°C for 1 hour, and then checking whether a film is formed.

Examples of silicones having a crosslinked structure include organopolysiloxanes having a viscosity of 300,000 mPa·s or more at 25°C and represented by the following formula,

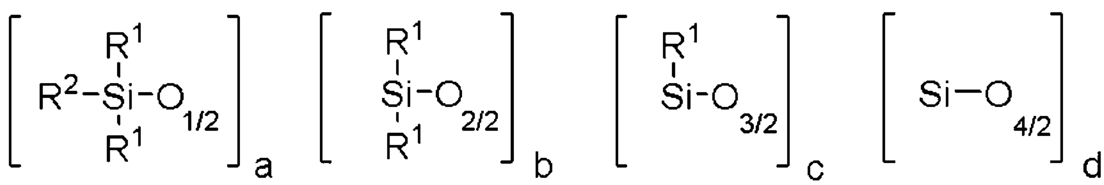

wherein $R^1$ is each independently a hydrogen atom or a substituted or unsubstituted monovalent organic group having 1 to 20 carbon atoms, $R^2$ is each independently a group selected from the above options for $R^1$, a hydroxyl group, or an alkoxy group having 1 to 20 carbon atoms, "a", "b", "c", and "d" are values that satisfy a viscosity of 300,000 mPa·s or more for the organopolysiloxane at 25°C, $a \geq 2$, $c \geq 0$, $d \geq 0$, $c+d \geq 1$, and "b" can typically be a value of 200 or more, and preferably 500 or more. However, when the value of c+d is large, the number of crosslinking units increases, so that even if "b" is 200 or less, the viscosity may sometimes be 300,000 mPa·s or more.

In the present invention, the viscosity was measured at 25°C using a BM or BH type rotational viscometer. Note that, for substances for which this viscosity can be measured in liquid form, it is measured as is, but for substances whose viscosity is too high for it to be measured, the viscosity of a 15% or 10% toluene solution may be measured. For all substances whose viscosity is too high to be measured in liquid form, the viscosity is regarded as 300,000 mPa·s or higher.

Compositions that utilize the composition of the present invention as a catalyst can be widely used, for example, as damage protection agents, water repellents, and release agents for paper, plastic sheets, and rubber products; damage protection agents, water repellents, waterproofing agents, texture improvers, and sealants for cloth; water repellents,

waterproofing agents, and release agents for concrete, mortar, and wood; inorganic or organic binders, fiber treatment agents, paints, release agents, coating agents, etc.

EXAMPLE

Hereinafter, the present invention will be described in more detail by presenting Examples and Comparative Examples. However, the present invention is not limited thereto. "%" representing concentration and content indicates "% by mass."

(A) Inorganic tin compounds

- (A-1) Neostan U-28 (product name): manufactured by Nitto Kasei Co., Ltd., tin bis(2-ethylhexanoate)
- (A-2) Neostan U-50 (product name): manufactured by Nitto Kasei Co., Ltd., tin bisneodecanoate

(B) Liquid paraffin
(B-1) KAYDOL (product name) : manufactured by Sonneborn, liquid paraffin, average carbon number 35
(C) Surfactants

- (C-1) Emulgen 1108 (product name): Kao Chemical Co., Ltd., polyoxyethylene alkyl lauryl ether, HLB value = 13.5
- (C-2) Emulgen 104P (product name): Kao Chemical Co., Ltd., polyoxyethylene lauryl ether, HLB value=9.6
- (C-3) Emulgen 123P (product name): Kao Chemical Co., Ltd., polyoxyethylene lauryl ether, HLB value=16.9

(E) Organic tin compound
(E-1) Neostan U-810 (product name): manufactured by Nitto Kasei Co., Ltd., dioctyltin dilaurate

[Average Particle Size of Emulsion]

This is the particle size measured using a laser diffraction/scattering particle size distribution measuring device LA-960 (manufactured by Horiba, Ltd.) at a volume integrated value of 50%.

[Example 1]

(A-1) Neostan U-28: 100 parts by mass;
(B-1) KAYDOL: 18.0 parts by mass;
(C-1) Emulgen 1108: 9.6 parts by mass; and
(D) water: 191.9 parts by mass
were mixed and emulsified using a homomixer to obtain an emulsion composition. Then, the mixture was passed through a high-pressure homogenizer set to a pressure of 60 MPa to reduce the size of the emulsified particles of the emulsion, and thereby, an inorganic tin emulsion composition (I-1) was obtained. The average particle size of the obtained (I-1) was 330 nm.

[Example 2]

(A-1) Neostan U-28: 100 parts by mass;
(B-1) KAYDOL: 28.5 parts by mass;
(C-1) Emulgen 1108: 20.2 parts by mass; and
(D) water: 105.4 parts by mass
were mixed and emulsified using a homomixer to obtain an emulsion composition. Then, the mixture was passed through a high-pressure homogenizer set to a pressure of 60 MPa to reduce the size of the emulsified particles of the emulsion, and thereby, an inorganic tin emulsion composition (I-2) was obtained. The average particle size of the obtained (I-2) was 310 nm.

[Example 3]

(A-1) Neostan U-28: 100 parts by mass;
(B-1) KAYDOL: 19.1 parts by mass;
(C-2) Emulgen 104P: 11.9 parts by mass;
(C-3) Emulgen 123P: 2.4 parts by mass; and
(D) water: 105.9 parts by mass
were mixed and emulsified using a homomixer to obtain an emulsion composition. Then, the mixture was passed through a high-pressure homogenizer set to a pressure of 60 MPa to reduce the size of the emulsified particles of the emulsion, and thereby, an inorganic tin emulsion composition (I-3) was obtained. The average particle size of the obtained (I-3) was 350 nm.

[Example 4]

(A-1) Neostan U-28: 100 parts by mass;
(B-1) KAYDOL: 19.1 parts by mass;
(C-1) Emulgen 1108: 13.5 parts by mass; and
(D) water: 105.4 parts by mass
were mixed and emulsified using a homomixer to obtain an emulsion composition (I-4). The average particle size of the obtained (I-4) was 440 nm.

[Example 5]

(A-1) Neostan U-28: 100 parts by mass;
(B-1) KAYDOL: 22.0 parts by mass;
(C-2) Emulgen 104P: 12.9 parts by mass;
(C-3) Emulgen 123P: 1.8 parts by mass; and
(D) water: 104.6 parts by mass
were mixed and emulsified using a homomixer to obtain an emulsion composition. Then, the mixture was passed through a high-pressure homogenizer set to a pressure of 60 MPa to reduce the size of the emulsified particles of the emulsion, and thereby, an inorganic tin emulsion composition (I-5) was obtained. The average particle size of the obtained (I-5) was 280 nm.

[Example 6]

(A-2) Neostan U-50: 100 parts by mass;
(B-1) KAYDOL: 19.1 parts by mass;
(C-2) Emulgen 104P: 11.4 parts by mass;
(C-3) Emulgen 123P: 1.7 parts by mass; and
(D) water: 105.9 parts by mass
were mixed and emulsified using a homomixer to obtain an emulsion composition. Then, the mixture was passed through a high-pressure homogenizer set to a pressure of 60 MPa to reduce the size of the emulsified particles of the emulsion, and thereby, an inorganic tin emulsion composition (I-6) was obtained. The average particle size of the obtained (I-6) was 490 nm.

[Example 7]

(A-2) Neostan U-50: 100 parts by mass;

(B-1) KAYDOL: 25.5 parts by mass;
(C-1) Emulgen 1108: 13.5 parts by mass; and
(D) water: 107.0 parts by mass
were mixed and emulsified using a homomixer to obtain an emulsion composition. Then, the mixture was passed through a high-pressure homogenizer set to a pressure of 60 MPa to reduce the size of the emulsified particles of the emulsion, and thereby, an inorganic tin emulsion composition (I-7) was obtained. The average particle size of the obtained (I-7) was 390 nm.

[Example 8]

(A-2) Neostan U-50: 100 parts by mass;
(B-1) KAYDOL: 19.5 parts by mass;
(C-2) Emulgen 104P: 11.4 parts by mass;
(C-3) Emulgen 123P: 1.7 parts by mass; and
(D) water: 105.9 parts by mass
were mixed and emulsified using a homomixer to obtain an emulsion composition (I-8). The average particle size of the obtained (I-8) was 520 nm.

[Example 9]

(A-1) Neostan U-28: 100 parts by mass;
(B-1) KAYDOL: 9.0 parts by mass;
(C-1) Emulgen 1108: 12.5 parts by mass; and
(D) water: 110.5 parts by mass
were mixed and emulsified using a homomixer to obtain an emulsion composition. Then, the mixture was passed through a high-pressure homogenizer set to a pressure of 60 MPa to reduce the size of the emulsified particles of the emulsion, and thereby, an inorganic tin emulsion composition (I-9) was obtained. The average particle size of the obtained (I-9) was 450 nm.

[Example 10]

(A-1) Neostan U-28: 100 parts by mass;
(B-1) KAYDOL: 20.0 parts by mass;
(C-1) Emulgen 1108: 8.5 parts by mass; and
(D) water: 110.0 parts by mass
were mixed and emulsified using a homomixer to obtain an emulsion composition. Then, the mixture was passed through a high-pressure homogenizer set to a pressure of 60 MPa to reduce the size of the emulsified particles of the emulsion, and thereby, an inorganic tin emulsion composition (I-10) was obtained. The average particle size of the obtained (I-10) was 500 nm.

[Comparative Example 1]

(A-1) Neostan U-28: 100 parts by mass;
(C-1) Emulgen 1108: 15.0 parts by mass; and
(D) water: 105.0 parts by mass
were mixed and emulsified using a homomixer to obtain an emulsion composition. Then, the mixture was passed through a high-pressure homogenizer set to a pressure of 60 MPa to reduce the size of the emulsified particles of the emulsion, and thereby, an inorganic tin emulsion composition (II-1) was obtained. The average particle size of the obtained (II-1) was 1120 nm.

[Comparative Example 2]

(A-1) Neostan U-28: 100 parts by mass;
(B-1) KAYDOL: 3.5 parts by mass;
(C-1) Emulgen 1108: 15.0 parts by mass; and
(D) water: 105.0 parts by mass
were mixed and emulsified using a homomixer to obtain an emulsion composition. Then, the mixture was passed through a high-pressure homogenizer set to a pressure of 60 MPa to reduce the size of the emulsified particles of the emulsion, and thereby, an inorganic tin emulsion composition (II-2) was obtained. The average particle size of the obtained (II-2) was 850 nm.

[Comparative Example 3]

(A-1) Neostan U-28: 100 parts by mass;
(B-1) KAYDOL: 15.0 parts by mass;
(C-1) Emulgen 1108: 4.5 parts by mass; and
(D) water: 105.0 parts by mass
were mixed and emulsified using a homomixer to obtain an emulsion composition. Then, the mixture was passed through a high-pressure homogenizer set to a pressure of 60 MPa to reduce the size of the emulsified particles of the emulsion, and thereby, an inorganic tin emulsion composition (II-3) was obtained. The average particle size of the obtained (II-3) was 1200 nm.

[Comparative Example 4] Organic Tin Compound

(E-1) Neostan U-810: 100 parts by mass;
(B-1) KAYDOL: 18.0 parts by mass;
(C-1) Emulgen 1108: 9.6 parts by mass; and
(D) water: 191.9 parts by mass
were mixed and emulsified using a homomixer to obtain an emulsion composition. Then, the mixture was passed through a high-pressure homogenizer set to a pressure of 60 MPa to reduce the size of the emulsified particles of the emulsion, thereby obtaining an organic tin emulsion composition (II-4). The average particle size of the obtained (II-4) was 320 nm.

[Average Particle Size of Emulsion]

This is the particle size measured using a laser diffraction/scattering particle size distribution measuring device LA-960 (manufactured by Horiba, Ltd.) at a volume integrated value of 50%.

[Storage Stability (25°C)]

Each emulsion composition obtained in the Examples and Comparative Examples was stored at 25°C for 3 months in a stationary state. After storage, the emulsion compositions were visually inspected. Those for which phase separation was confirmed within one month were rated ×. Those for which there was no separation within one month, but phase separation was confirmed within two months were rated △. Those for which there was no separation within two months, but phase separation was confirmed within three months were rated ○. Those for which there was no separation even after three months were rated ◎.

[Storage Stability (40°C)]

Each emulsion composition obtained in the Examples and Comparative Examples was stored at 40°C for 2 weeks in a stationary state. After storage, the emulsion compositions were visually inspected. Those for which phase separation was confirmed within one week were rated ×. Those for which there was no separation within one week, but

phase separation was confirmed within two weeks were rated △. Those for which there was no separation even after two weeks were rated ○.

[Table 1]

| | Example 1 | Example 2 | Example 3 | Example 4 | Example 5 |
|---|---|---|---|---|---|
| (A-1) | 100 | 100 | 100 | 100 | 100 |
| (A-2) | | | | | |
| (B-1) | 18.0 | 28.5 | 19.1 | 19.1 | 22.0 |
| (C-1) | 9.6 | 20.2 | | 13.5 | |
| (C-2) | | | 11.9 | | 12.9 |
| (C-3) | | | 2.4 | | 1.8 |
| (D) | 191.9 | 105.4 | 105.9 | 105.4 | 104.6 |
| Average particle size (nm) | 330 | 310 | 350 | 440 | 280 |
| Storage stability (25°C) | ○ | ◎ | ○ | ○ | ◎ |
| Storage stability (40°C) | ○ | ○ | ○ | Δ | ○ |

Table 2

| | Example 6 | Example 7 | Example 8 | Example 9 | Example 10 |
|---|---|---|---|---|---|
| (A-1) | | | | 100 | 100 |
| (A-2) | 100 | 100 | 100 | | |
| (B-1) | 19.1 | 25.5 | 19.5 | 9 | 20 |
| (C-1) | | 13.5 | | 12.5 | 8.5 |
| (C-2) | 11.4 | | 11.4 | | |
| (C-3) | 1.7 | | 1.7 | | |
| (D) | 105.9 | 107 | 105.9 | 110.5 | 110 |
| Average particle size (nm) | 490 | 390 | 520 | 450 | 500 |
| Storage stability (25°C) | ○ | ○ | ○ | Δ | Δ |
| Storage stability (40°C) | ○ | ○ | Δ | Δ | Δ |

Table 3

| | Comparative Example 1 | Comparative Example 2 | Comparative Example 3 | Comparative Example 4 |
|---|---|---|---|---|
| (A-1) | 100 | 100 | 100 | |
| (A-2) | | | | |
| (B-1) | | 3.5 | 15.0 | 18.0 |
| (C-1) | 15.0 | 15.0 | 4.5 | 9.6 |
| (C-2) | | | | |
| (C-3) | | | | |
| (D) | 105.0 | 105.0 | 105.0 | 191.9 |
| (E-1) | | | | 100 |
| Average particle size (nm) | 1120 | 850 | 1200 | 320 |
| Storage stability (25°C) | × | × | × | ◎ |

(continued)

| | Comparative Example 1 | Comparative Example 2 | Comparative Example 3 | Comparative Example 4 |
|---|---|---|---|---|
| Storage stability (40°C) | × | × | × | ○ |

As shown in Tables 1 to 3, for each of the Examples of the present invention, the average particle size and the storage stabilities at 25°C and 40°C were all good. On the other hand, for Comparative Examples 1 to 3, the average particle size was large and the storage stabilities at 25°C and 40°C were poor. Furthermore, the results show that similarly to Comparative Example 4, in which an organic tin compound was used, for each of the Examples of the present invention, the average particle size and the storage stabilities at 25°C and 40°C were not poor.

[Film Properties]

Imitating Production Example 1 of Patent Document 5, an organopolysiloxane emulsion was prepared as follows.

498 g of octamethylcyclotetrasiloxane, 2 g of triethoxyphenylsilane, 50 g of 10% aqueous sodium lauryl sulfate solution, and 50 g of 10% aqueous dodecylbenzenesulfonic acid solution were charged and emulsified uniformly using a homomixer. Then, 400 g of water was gradually added to dilute the mixture, and the mixture was passed through a high-pressure homogenizer at a pressure of 30 MPa to obtain a uniform white emulsion. This emulsion was transferred to a glass flask equipped with a stirrer, a thermometer, and a reflux condenser, and polymerized at 50°C for 24 hours, and then aged at 110°C for 24 hours. It was then neutralized with 12 g of 10% aqueous sodium carbonate solution. The above procedure gave an emulsion (III) containing the organopolysiloxane represented by the average composition formula,

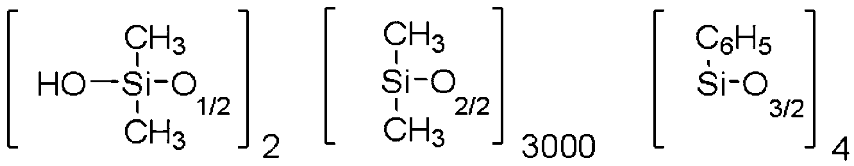

30 g of the obtained emulsion (III) was added to 200 g of IPA while stirring to break down the emulsion and extract the organopolysiloxane. This organopolysiloxane was dried at 105°C for 3 hours, and then its viscosity was measured with a rotational viscometer at 25°C. However, since it was impossible to measure the viscosity as is, it was measured in a 15% toluene solution, through which it was found to be 1,350 mPa·s.

Using the emulsion (III), the film properties were measured as follows.

(III): 100 parts by mass;
(IV) colloidal silica (Snowtex C, Nissan Chemical Industries): 30 parts by mass; and
the emulsion of the tin compound obtained in each Example and Comparative Example: 3 parts by mass
were mixed, and 20 g of the mixture was poured into a polypropylene resin disposable tray (150 mm x 105 mm x 19 mm) and left for 48 hours in an atmosphere of temperature 25°C and relative humidity 60%, and then heated at 105°C for 1 hour to produce a cured film of about 1 mm in thickness. The hardness, tensile strength, and elongation of this film were measured in accordance with JIS K 6249.

The results are shown in the table below.

Note that Comparative Example 5 is a Comparative Example that does not contain the emulsion compositions (I) or (II) obtained in the above-mentioned Examples and Comparative Examples.

Table 4

| | Example 1 | Example 2 | Example 3 | Example 4 | Example 5 |
|---|---|---|---|---|---|
| I-1 | 3 | | | | |
| I-2 | | 3 | | | |
| I-3 | | | 3 | | |
| I-4 | | | | 3 | |

(continued)

| | | Example 1 | Example 2 | Example 3 | Example 4 | Example 5 |
|---|---|---|---|---|---|---|
| I-5 | | | | | | 3 |
| I-6 | | | | | | |
| I-7 | | | | | | |
| I-8 | | | | | | |
| I-9 | | | | | | |
| I-10 | | | | | | |
| II-1 | | | | | | |
| II-2 | | | | | | |
| II-3 | | | | | | |
| II-4 | | | | | | |
| III | | 100 | 100 | 100 | 100 | 100 |
| IV | | 30 | 30 | 30 | 30 | 30 |
| Film properties | Hardness | 24 | 29 | 24 | 22 | 30 |
| | Tensile strength (MPa) | 2.4 | 2.4 | 2.1 | 2.6 | 2.5 |
| | Elongation (%) | 660 | 850 | 760 | 510 | 950 |

Table 5

| | | Example 6 | Example 7 | Example 8 | Example 9 | Example 10 |
|---|---|---|---|---|---|---|
| I-1 | | | | | | |
| I-2 | | | | | | |
| I-3 | | | | | | |
| I-4 | | | | | | |
| I-5 | | | | | | |
| I-6 | | 3 | | | | |
| I-7 | | | 3 | | | |
| I-8 | | | | 3 | | |
| I-9 | | | | | 3 | |
| I-10 | | | | | | 3 |
| II-1 | | | | | | |
| II-2 | | | | | | |
| II-3 | | | | | | |
| II-4 | | | | | | |
| III | | 100 | 100 | 100 | 100 | 100 |
| IV | | 30 | 30 | 30 | 30 | 30 |
| Film properties | Hardness | 24 | 25 | 22 | 21 | 20 |
| | Tensile strength (MPa) | 2.4 | 2.6 | 2.1 | 2.2 | 2.1 |
| | Elongation (%) | 750 | 690 | 480 | 460 | 520 |

Table 6

| | | Compara-tive Example 1 | Compara-tive Example 2 | Compara-tive Example 3 | Compara-tive Example 4 | Compara-tive Example 5 |
|---|---|---|---|---|---|---|
| I-1 | | | | | | |
| I-2 | | | | | | |
| I-3 | | | | | | |
| I-4 | | | | | | |
| I-5 | | | | | | |
| I-6 | | | | | | |
| I-7 | | | | | | |
| I-8 | | | | | | |
| I-9 | | | | | | |
| I-10 | | | | | | |
| II-1 | | 3 | | | | |
| II-2 | | | 3 | | | |
| II-3 | | | | 3 | | |
| II-4 | | | | | 3 | |
| III | | 100 | 100 | 100 | 100 | 100 |
| IV | | 30 | 30 | 30 | 30 | 30 |
| Film properties | Hardness | 22 | 21 | 22 | 25 | 4 |
| | Tensile strength (MPa) | 2.1 | 2.3 | 2.2 | 2.5 | 0.3 |
| | Elongation (%) | 600 | 650 | 750 | 950 | 500 |

As is clear from the above results, the inorganic tin emulsion composition of the present invention has better storage stability than Comparative Examples 1 to 3, has the same curing properties as the organic tin catalyst of Comparative Example 4, and has superior curing properties to the inorganic tin emulsion composition of Comparative Example 5 and to those that contain no organic tin emulsion composition.

The present description includes the following inventions.

[1]: An inorganic tin emulsion composition comprising: (A) an inorganic tin compound: 100 parts by mass; (B) a hydrocarbon oil: 5 to 100 parts by mass; (C) a surfactant: 5 to 50 parts by mass; and (D) water: 50 to 2,000 parts by mass.

[2]: The emulsion composition according to [1], wherein the component (B) is an aliphatic hydrocarbon oil having 10 to 50 carbon atoms.

[3]: The emulsion composition according to [1] or [2], wherein the component (A) is at least one of tin bis(2-ethylhexanoate) and tin bisneodecanoate.

[4]: The emulsion composition according to any one of [1] to [3], wherein the inorganic tin emulsion composition contains emulsified particles having an average particle size of 500 nm or less.

[5]: The emulsion composition according to any one of [1] to [4], containing no organic tin compound.

[6]: A film-forming silicone emulsion composition, comprising the composition according to any one of [1] to [5].

[7]: A coating agent comprising the composition according to any one of [1] to [6].

[8]: A manufacturing method of an inorganic tin emulsion composition, comprising a step of forming emulsion particles by using an emulsifying apparatus to emulsify a mixture containing: (A) an inorganic tin compound: 100 parts by mass; (B) a hydrocarbon oil: 5 to 100 parts by mass; (C) a surfactant: 5 to 50 parts by mass; and (D) water: 50 to 2,000 parts by mass.

[9]: The manufacturing method of an inorganic tin emulsion composition according to [8], further comprising a step of reducing the particle size using an emulsifying apparatus that reduces the particle size of emulsion particles using high pressure.

[10]: The manufacturing method according to [9], wherein the average particle size of the emulsion particles is reduced to 500 nm or less in the step of reducing the particle size using an emulsifying apparatus that reduces the particle size of emulsion particles using high pressure.

INDUSTRIAL APPLICABILITY

The inorganic tin emulsion composition of the present invention has good storage stability and excellent curing properties. It is suitable as a curing catalyst for water-based compositions.

It should be noted that the present invention is not limited to the above-described embodiments. The above-described embodiments are just examples, and any examples that substantially have the same features and demonstrate the same effects as the technical concepts disclosed in the claims of the present invention are included in the technical scope of the present invention.

## Claims

**1.** An inorganic tin emulsion composition comprising:

(A) an inorganic tin compound: 100 parts by mass;
(B) a hydrocarbon oil: 5 to 100 parts by mass;
(C) a surfactant: 5 to 50 parts by mass; and
(D) water: 50 to 2,000 parts by mass.

**2.** The emulsion composition according to claim 1, wherein the component (B) is an aliphatic hydrocarbon oil having 10 to 50 carbon atoms.

**3.** The emulsion composition according to claim 1, wherein the component (A) is at least one of tin bis (2-ethylhexanoate) and tin bisneodecanoate.

**4.** The emulsion composition according to claim 1, wherein the inorganic tin emulsion composition contains emulsified particles having an average particle size of 500 nm or less.

**5.** The emulsion composition according to claim 1, containing no organic tin compound.

**6.** A film-forming silicone emulsion composition, comprising the composition according to claim 1.

**7.** A coating agent comprising the composition according to any one of claims 1 to 6.

**8.** A manufacturing method of an inorganic tin emulsion composition, comprising a step of forming emulsion particles by using an emulsifying apparatus to emulsify a mixture containing:

(A) an inorganic tin compound: 100 parts by mass;
(B) a hydrocarbon oil: 5 to 100 parts by mass;
(C) a surfactant: 5 to 50 parts by mass; and
(D) water: 50 to 2,000 parts by mass.

**9.** The manufacturing method of an inorganic tin emulsion composition according to claim 8, further comprising a step of reducing the particle size using an emulsifying apparatus that reduces the particle size of emulsion particles using high pressure.

**10.** The manufacturing method according to claim 9, wherein the average particle size of the emulsion particles is reduced to 500 nm or less in the step of reducing the particle size using an emulsifying apparatus that reduces the particle size of emulsion particles using high pressure.

## INTERNATIONAL SEARCH REPORT

International application No.
**PCT/JP2024/009335**

### A. CLASSIFICATION OF SUBJECT MATTER

***C08L 83/04***(2006.01)i; ***C08K 3/11***(2018.01)i; ***C08K 5/01***(2006.01)i; ***C09D 7/63***(2018.01)i; ***C09D 201/00***(2006.01)i
FI: C08L83/04; C08K3/11; C08K5/01; C09D7/63; C09D201/00

According to International Patent Classification (IPC) or to both national classification and IPC

### B. FIELDS SEARCHED

Minimum documentation searched (classification system followed by classification symbols)

C08L83/04; C08K3/11; C08K5/01; C09D7/63; C09D201/00

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

CAplus/REGISTRY (STN)

### C. DOCUMENTS CONSIDERED TO BE RELEVANT

| Category* | Citation of document, with indication, where appropriate, of the relevant passages | Relevant to claim No. |
|---|---|---|
| A | JP 2019-534903 A (DOW TORAY CO., LTD.) 05 December 2019 (2019-12-05) | 1-10 |
| A | WO 2021/029250 A1 (SHIN-ETSU CHEMICAL CO., LTD.) 18 February 2021 (2021-02-18) | 1-10 |
| A | JP 2009-57499 A (DOW CORNING TORAY CO., LTD.) 19 March 2009 (2009-03-19) | 1-10 |
| A | WO 2018/135369 A1 (SHIN-ETSU CHEMICAL CO., LTD.) 26 July 2018 (2018-07-26) | 1-10 |
| A | JP 2014-224164 A (SHIN-ETSU CHEMICAL CO., LTD.) 04 December 2014 (2014-12-04) | 1-10 |
| A | JP 2014-189577 A (THE YOKOHAMA RUBBER CO., LTD.) 06 October 2014 (2014-10-06) | 1-10 |
| P, A | WO 2024/038771 A1 (SHIN-ETSU CHEMICAL CO., LTD.) 22 February 2024 (2024-02-22) | 1-10 |

☐ Further documents are listed in the continuation of Box C.   ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **08 May 2024** | **21 May 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (July 2022)

**INTERNATIONAL SEARCH REPORT**
**Information on patent family members**

International application No.
**PCT/JP2024/009335**

| Patent document cited in search report | Publication date (day/month/year) | Patent family member(s) | Publication date (day/month/year) |
|---|---|---|---|
| JP 2019-534903 A | 05 December 2019 | US 2019/0194395 A1 | |
| | | WO 2018/037099 A1 | |
| | | EP 3504284 A1 | |
| | | CN 109689813 A | |
| | | KR 10-2019-0044633 A | |
| WO 2021/029250 A1 | 18 February 2021 | JP 2021-28353 A | |
| | | US 2022/0275209 A1 | |
| | | EP 4011985 A1 | |
| | | CN 114174383 A | |
| | | KR 10-2022-0044969 A | |
| JP 2009-57499 A | 19 March 2009 | US 2010/0216952 A1 | |
| | | WO 2009/028433 A1 | |
| | | EP 2183305 A1 | |
| | | KR 10-2010-0059821 A | |
| | | CN 101790556 A | |
| | | TW 200925185 A | |
| WO 2018/135369 A1 | 26 July 2018 | JP 2018-115288 A | |
| | | US 2019/0375938 A1 | |
| | | US 2023/0143208 A1 | |
| | | EP 3572066 A1 | |
| | | CN 110214002 A | |
| | | KR 10-2019-0107108 A | |
| | | TW 201833227 A | |
| JP 2014-224164 A | 04 December 2014 | US 2016/0096959 A1 | |
| | | WO 2014/185158 A1 | |
| | | EP 2998360 A1 | |
| | | CN 105209550 A | |
| JP 2014-189577 A | 06 October 2014 | (Family: none) | |
| WO 2024/038771 A1 | 22 February 2024 | (Family: none) | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP S5616553 A
- JP H0673291 A
- JP 2005306994 A
- JP 2008231276 A
- JP 2014224164 A